## Europäisches Patentamt

## European Patent Office

## Office européen des brevets

(19)

(11) Veröffentlichungsnummer: **0 129 614**
**B1**

(12) # EUROPÄISCHE PATENTSCHRIFT

(45) Veröffentlichungstag der Patentschrift:
**02.09.87**

(51) Int. Cl.⁴: **A 01 C 7/08**

(21) Anmeldenummer: **83109021.2**

(22) Anmeldetag: **13.09.83**

(54) **Sämaschine.**

(30) Priorität: **23.06.83 EP 83106153**

(43) Veröffentlichungstag der Anmeldung:
**02.01.85 Patentblatt 85/1**

(45) Bekanntmachung des Hinweises auf die Patenterteilung:
**02.09.87 Patentblatt 87/36**

(84) Benannte Vertragsstaaten:
**AT BE CH DE FR GB IT LI LU NL SE**

(56) Entgegenhaltungen:
**DE-A-3 105 641**
**DE-C-3 217 428**
**FR-A-1 595 375**
**FR-A-2 120 844**
**FR-A-2 503 979**
**GB-A-1 513 238**
**US-A-3 570 605**

(73) Patentinhaber: **Kirchberger, Franz, Lichtenfelser Strasse 43, D-8623 Staffelstein (DE)**

(72) Erfinder: **Kirchberger, Franz, Lichtenfelser Strasse 43, D-8623 Staffelstein (DE)**

(74) Vertreter: **LOUIS, PÖHLAU, LOHRENTZ & SEGETH, Kesslerplatz 1 P.B. 3055, D-8500 Nürnberg (DE)**

EP 0 129 614 B1

LIBER, STOCKHOLM 1987

## Beschreibung

Die Erfindung betrifft eine Sämaschine mit einem an einem Grundrahmen befestigten Saatgutvorratsbehälter und relativ zum Saatgutvoiratsbehälter anhebbaren und absenkbaren Scharen und einer zwischen dem Grundrahmen und den Scharen wirksamen Einrichtung zur Ausübung eines im wesentlichen konstanten Druckes auf die in den Boden greifenden Scharen, wobei der Grundrahmen mit dem Rahmen eines Fahrzeuges verbindbar ist.

Sämaschinen, bei denen für den im wesentlichen konstanten Druck der Schare mit Hilfe von Federeinrichtungen oder Kolbenzylindereinheiten in Verbindung mit einem genügend großen Speicher gesorgt wird, sind bekannt (sh. beispielsweise DE-A- 32 17 428.4-23 angemeldet am 8.5.82 und veröffentlich am 7.7.83). Diese Sämaschinen, wie auch alle anderen Sämaschinen, weisen alle ein oder mehrere Laufräder auf, die unmittelbar am Grundrahmen befestigt sind. Aufgrund dieser Abstützung über die Laufräder wird der Grundrahmen der Sämaschine in einem festen Abstand vom Boden gehalten, was bislang angestrebt wurde, um einen konstanten Abstand zwischen Saatgutvorratsbehälter und den Scharen zu erhälten. Ein Anheben und Absenken der Schare war nur erforderlich, um die Eindringtiefe der Schare in den Boden verstellen zu können, oder bei etwa konstantem Druck der Schare auf den Boden Anpassungen an wechselnde Bodenhärten zu ermöglichen. Zu ergänzen ist noch, daß das am Grundrahmen befestigte Laufrad oftmals auch noch für den Antrieb einer Dosiereinrichtung der Sämaschine herangezogen wird.

Die Laufräder der bekannten Sämaschinen begrenzen die Arbeitsgeschwindigkeit, also die Fahrgeschwindigkeit der Sämaschine beim Säen, weil das Rad bei unebenem Boden anfängt, unruhig zu laufen und zu springen, wenn die Fahrgeschwindigkeit gesteigert wird. Dabei ist zu berücksichtigen, daß das Gewicht der von einem Fahrzeug, in der Regel einem Traktor, hinterhergezogenen Sämaschine vergleichsweise gering ist und die Laufräder relativ klein sind. Ferner neigen die Laufräder bei schwierigen Einsatzverhältnissen, wie z. B. nassen und schweren Böden, zum Blockieren. Aber auch bei weniger schweren Einsatzbedingungen wird mit einem Schlupf der Laufräder zu rechnen sein. Abgesehen von den damit verbundenen Beanspruchungen der Maschine haben diese Wirkungen auch noch zur Folge, daß eine über die Laufräder erfolgenge Kontrolle der Dosiereinrichtungen sowie ein über die Laufräder erfolgender Antrieb der Dosiereinrichtungen nicht mehr genau arbeiten, so daß eine gleichmäßige Verteilung des Saatgutes über der landwirtschaftlichen Nutzfläche nicht mit der gewünschten Genauigkeit sichergestellt werden kann.

Der Erfindung liegt nun die Aufgabe zugrunde, die bei den bekannten Sämaschinen in Verbindung mit den Laufrädern der Sämaschinen auftretenden Nachteile auszuschalten.

Diese Aufgabe wird erfindungsgemäß bei der eingangs als bekannt vorausgesetzten Sämaschine dadurch gelöst, daß der Grundrahmen der Sämaschine mit dem Fahrzeugrahmen in auskragender Weise freitragend, ohne zusätzliche Abstützung am Boden befestigbar ist.

Der Verzicht auf eine Abstützung der Sämaschine selbst am zu bearbeitenden Boden, insbesondere durch eine Laufeinrichtung, wie z. B. Laufräder oder Kufen, beseitigt naturgemäß alle mit der Laufeinrichtung im Zusammenhang stehenden Probleme. An Stelle der Abstützung der Sämaschine über Laufräder am Boden wird nunmehr der Grundrahmen der Sämaschine mit dem Rahmen des Zugfahrzeuges in auskragender Weise befestigt, wobei Relativbewegungen in der Höhe zwischen Zugfahrzeug und Sämaschine praktisch ausgeschaltet sind. Das hat natürlich zur Folge, daß jetzt sich der Abstand des vom Fahrzeugrahmen entfernt liegenden Endes des Grundrahmens, an dem die Scharen vorgesehen sind, zum zu bearbeitenden Boden ändert aufgrund der bei unebenem Boden auftretenden Nickbewegungen. Diese zum Teil beträchtlichen Abstandsänderungen sind aber unschädlich, wenn die Schare mit konstantem Druck gegen den Boden gedrückt werden und relativ zum Grundrahmen bzw. zum Saatgutvorratsbehälter beweglich sind, z. B. indem sie über einen flexiblen Schlauch mit dem Saatgutbehälter verbunden sind oder indem sie über teleskopartige Saatgutrohre in Verbindung mit dem Saatgutbehälter stehen. Auf diese Weise wird sichergestellt, daß unabhängig vom Bodenabstand die Schare in der gewünschten Weise in den Boden dringen.

Die Dosiereinrichtung der Sämaschine kann hydraulisch arbeiten, so daß aus diesem Grunde Laufräder nicht notwendig sind. Elektrohydraulische Antriebe sind beispielsweise in der EP-A-00 75 313 beschrieben. Die Dosiereinrichtung kann auch von der Zapfwelle der Zugmaschine angetrieben werden. Es ist aber auch möglich, ein über eine Kette antriebsmäßig mit der Sämaschine verbundenes und hinter der Sämaschine hergezogenes Antriebsrad zu verwenden, das gleichzeitig als Impulsgeber für die verschiedenen Werte für eine Regelung der pro Flächeneinheit aufzubringenden Saatgutmenge dienen kann. Diese Werte können aber auch auf andere Weise, beispielsweise durch kontaktfreies Abtasten der Bodenoberfläche oder durch Messungen an den Laufrädern dcr Zugmaschine erhalten werden.

Abgesehen von der Vermeidung der obenerwähnten Nachteile hat die Erfindung auch noch den Vorteil, daß Bauteile eingespart werden und ein Wechsel vom Solobetrieb zu einer Kombination von zwei Maschinen, beispielsweise Sämaschine und Kreiselegge zusammen, leichter wird. Aufgrund des fehlenden Abstützrades läßt sich die erfindungsgemäße Sämaschine in jedem Falle leichter an tragenden Bodenbearbeitungsgeräten anbringen als die bekannten Sämaschinen. Das gilt auch dann, wenn ein Laufrad beispielsweise für Meßzwecke hinterhergezogen wird, da die Position dieses Laufrades relativ zur Sämaschine beliebig gewählt werden kann.

Die Befestigung einer Zugmaschine oder eines tragenden Bodenbearbeitungsgerätes kann in bekannter Weise erfolgen, so wie dies auch bei anderen Bodenbearbeitungsgeräten, wie z. B. Pflügen, gemacht wird.

Um sicherzustellen, daß nicht nur Nickbewegungen der in auskragender Weise an der Zugmaschine oder einem anderen Bodenbearbeitungsgerät befestigten Sämaschine in Fahrtrichtung, sondern auch quer zur Fahrtrichtung ausgeglichen werden, ist es ferner zweckmäßig, wenn die Säschare quer zur Fahrtrichtung zu mehreren aufeinanderfolgenden Gruppen zusammengefaßt sind, die von je einer die Säschare mit konstanten Druck nach unten beaufschlagende Druckeinrichtung beaufschlagt werden, wobei alle Druckeinrichtungen den gleichen Druck ausüben.

Die Erfindung wird nun an Ausführungsbeispielen und an Hand der beiliegenden Zeichnung näher erläutert. Es zeigen:

Fig. 1 eine schemitische Seitenansicht einer Sämaschine ohne Traktor, aber mit einem Laufrad, die als bekannt vorausgesetzt wird,

Fig. 2 ein Schaltbild des elektrischen und hydraulischen Teils eines Steuersystems für die Sämaschine der Fig. 1,

Fig. 3 die erfindungsgemäße Sämaschine ohne Laufrad,

Fig. 4 ein für die erfindungsgemäße Sämaschine abgewandeltes Schaltbild,

Fig. 5 eine erfindungsgemäße Sämaschine mit einem Nachlaufrad,

Fig. 6 eine erfindungsgemäße Sämaschine, die an einem tragenden Bodenbearbeitungsgerät befestigt ist, und

Fig. 7 schematisch eine Draufsicht auf eine erfindungsgemäße Sämaschine.

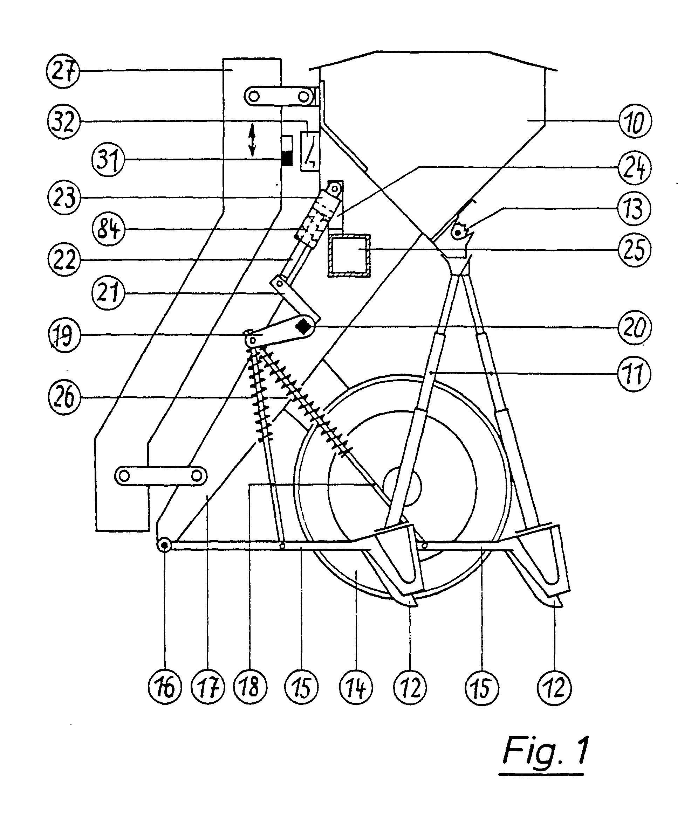

In der in Fig. 1 schematisch gezeigten Sämaschine ist mit 10 ein von oben beschickbarer Saatkasten mit V-förmiger Querschnittsform bezeichnet. Vom Boden dieses Saatkastens 10 erstrecken sich zahlreiche Saatrohre 11 nach unten, die in Schare 12 münden. Zwischen den Auslaßöffnungen im Boden des Saatkastens 10 und den oberen Erden der Saatrohre 11 sind auf einer Welle im seitlichen Abstand nebeneinander die Saatgut-Dosierräder 13 befestigt. Der Wellenantrieb erfolgt über einen nicht gezeigten Antriebszug durch eines der Laufräder 14 der Sämaschine. Die Schare 12 sind am einen Ende von Schararmen 15 befestigt, die jeweils mit ihrem anderen Ende auf einer Achse 16 auf- und abschwenkbar gelagert sind. Die Achse 16 erstreckt sich zwischen den unteren Enden von Maschinenrahmenteilen 17, an denen oben auch der Saatkasten 10 befestigt ist. Um den Bewegungen der Schare 12 um die Achse 16 folgen zu können, sind die Saatrohre 11 teleskopierbar.

An jedem Schararm 15 ist eine Betätigungsstange 18 angelenkt. Die oberen Enden dieser Betätigungsstangen 18 sind mit jeweils einem Hebel 19 gelenkig verbunden, die ihrerseits drehfest auf einer Welle 20 befestigt sind. Die Welle 20 ist in den Maschinenrahmenteilen 17 drehbeweglich gelagert. An dieser Welle 20 ist ferner mit einem Ende ein Hebel 21 drehfest angeordnet, an dessen anderen Ende eine Kolbenstange 22 eines Schar-Hubzylinders 23 gelenkig befestigt ist. Der Schar-Hubzylinder 23 ist seinerseits schwenkbar zwischen zwei Lagerteilen 24 angeordnet, die an einem Holm 25 befestigt sind, der sich zwischen den Maschinenrahmenteilen 17 erstreckt. Zwischen jeder Betätigungsstange 18 für einen Schararm 15 und einem Hebel 19 ist eine Schardruckfeder 26 zur Einzelabfederung der Schare 12 eingespannt. Zu diesem Zweck sind die Betätigungsstangen 18 mit einem gewissen axialen Spiel an den Hebeln 19 angelenkt. Aus Vorstehendem geht hervor, daß bei Betatigung des Schar-Hubzylinders 23 die Schare 12 über den Hebel 21, die Welle 20, die Hebel 19 und die Betätigungsstangen 18 im Uhrzeigersinn um die Achse 16 geschwenkt werden können, wobei die Schare 12 in Arbeitsposition ausfahren und für die Säarbeit gegen den Boden vorgespannt werden.

Die in Fig. 1 schematisch gezeigte Sämaschine ist zum Anbau an die hydraulische Aushebevorrichtung eines Traktors (nicht gezeigt) bestimmt. Die Sämaschine weist zu diesem Zweck ein mit den Maschinenrahmenteilen 17 in einem begrenzten Ausmaß beweglich verbundenen Vorrahmen 27 auf, an den der Oberlenker sowie die beiden Unterlenker der traktorseitigen Aushebevorrichtung angeschlossen werden. Die Relativbewegung des Vorrahmens 27 beim Aushebevorgang gegenüber dem Hauptrahmen der Sämaschine wird durch nicht gezeigte Anschläge begrenzt, so daß nach Beendigung einer verhältnismäßig kurzen anfänglichen Relativbewegung dann die gesamte Sämaschine angehoben wird.

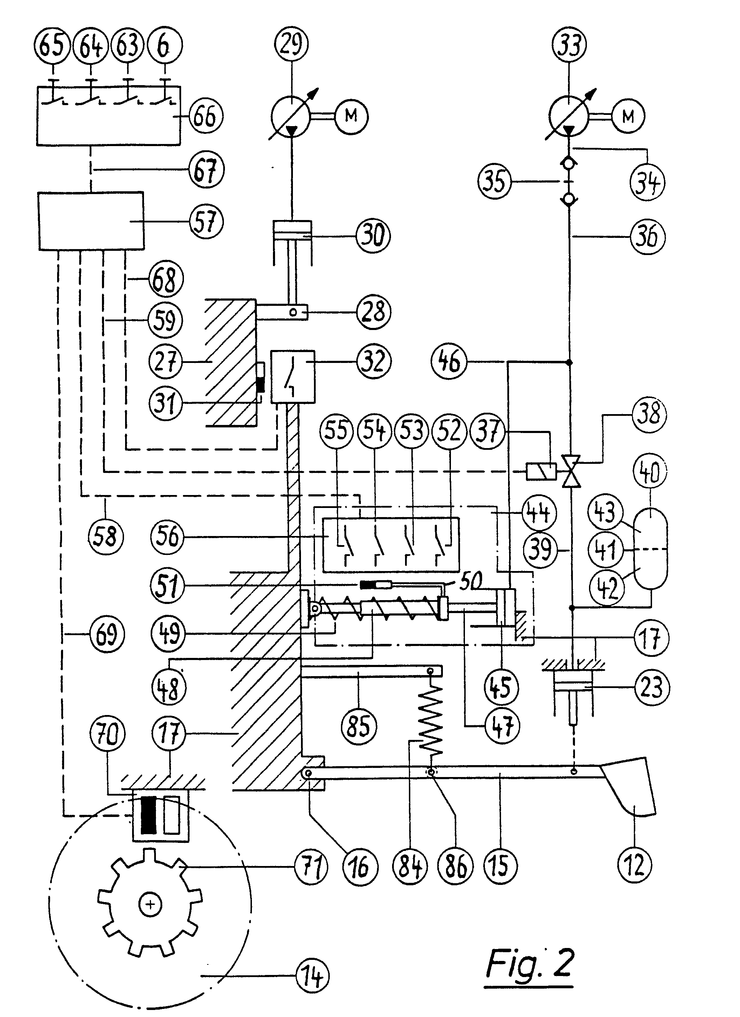

Im folgenden wird unter Bezugnahme auf Fig. 2 das kombinierte elektrische und hydraulische Steuersystem für die vorstehend erläuterte Sämaschine beschrieben.

Mit 29 ist in Fig. 2 schematisch ein Grundsteuergerät für einen Hydraulik-Zylinder 30 der Aushebevorrichtung des Traktors bezeichnet, dessen Kolbenstange an einem Arm 28 angreift, welcher mit dem oben erwähnten Vorrahmen 27 der Drillmaschine starr verbunden ist, der in Fig. 2 lediglich schematisch, gleich dem Maschinenrahmenteil 17 angedeutet ist. Mit 32 ist ein elektrischer Schalter gekennzeichnet, z. B. in Form eines Reed-Schalters, der durch ein am Vorrahmen 27 befestigtes Betätigungselement 31 in Form eines Permanentmagneten geschaltet wird, wenn der Vorrahmen 27 die oben erwähnte Relativbewegung beim Ausheben der Sämaschine durch den Traktor ausführt. Die Funktion des elektrischen Schalters 32 wird noch beschrieben.

Ein am Traktor angeordnetes Zusatz-Steuergerät 33 für den Schar-Hubzylinder 23 ist über eine Hydraulik-Leitung 34 und eine Rohrkupplung 35 mit der drillmaschinenseitigen Hydraulikleitung 36 verbunden, die zum Eingang eines durch einen Elektromagneten 37 betätigbaren Sperrventils 38 geführt ist. Der Ausgang des Sperrventils 38 ist über eine Hydraulikleitung 39 mit dem Schar-Hubzylinder 23 verbunden. An der Hydraulikleitung 39 ist eine hydropneumatische Feder 40 angeschlossen, die während der Säarbeit die vertikalen Bewegungen der Schare 12 bei Bodenunebenheiten dämpft und den Druck der Hydraulikflüssigkeit im Steuersystem stabilisiert. Die hydropneumatische Feder 40 besteht aus einem Druckbehälter, dessen Innenraum durch eine elastische Trennwand 41 in einen Hydraulikabschnitt 42 und einen Gasdruckabschnitt 43 unterteilt ist.

Mit 44 ist in Fig. 2 ein auf unterschiedliche Druckwerte in der Hydraulikleitung 36 ansprechender elektrischer Signalgeber bezeichnet. Dieser Signalgeber 44 weist einen Hydraulik-Zylinder 45 auf, der über eine Hydraulikleitung 46 vor dem Eingang des Sperrventils 38 an die Hydraulikleitung 36 angeschlossen ist. Die Kolbenstange 47 des Hydraulik-Zylinders 45 wirkt gegen einen Stoßdämpfer 48, und eine am Stoßdämpfer 48 angreifende Schraubendruckfeder 49 drückt die Kolbenstange 47 bei druckfreiem Hydraulik-Zylinder 45 nach rechts in die Ausgangsstellung. Die Kolbenstante 47 trägt einen Arm 50 mit einem Permanent-Magneten 51, der als Betätigungselement für eine Reihe von elektrischen Schaltern 52-55 in Form von Reed-Schaltern dient. Diese Reed-Behalter sind in einem gemeinsamen Gehäuse 56 des Signalgebers 44 in einer linearen Reihe angeordnet, so daß sie von dem Permanentmagneten 51 nacheinander betätigt werden können, wenn dieser sich am Schaltergehäuse 56 entlang bewegt.

Die elektrischen Schalter 52-55 sind über diskrete elektrische Leitungen, in Fig. 2 vereinfacht durch eine gestrichelte Linie 58 angedeutet, mit einer bei 57 schematisch als Block gezeigten logischen Schaltung verbunden.

Jedem elektrischen Schalter 53, 54 und 55 ist ein von Hand betätigbarer elektrischer Schalter 63, 64 und 65 in einem Schaltergehäuse 66 zugeordnet, die gleichfalls über getrennte elektrische Leiter, in Fig. 2 vereinfacht durch die gestrichelte Linie 67 angedeutet, mit der logischen Schaltung 57 verbunden sind. Schließlich ist von der logischen Schaltung 57 ein elektrischer Leiter 59 zum Elektromagneten 37 geführt, der das Sperrventil 38 betätigt.

Jeder der elektrischen Schalter 53, 54 und 55 im Signalgeber 44 ist jeweils einem bestimmten Druckwert in der Hydraulikleitung 36 zugeordnet und damit auch einer bestimmten Schar-Vorspannung durch den Schar-Hubzylinder 23 bei geöffnetem Sperrventil 38. Dabei repräsentiert der elektrische Schalter 53 den kleinsten und der elektrische Schalter 55 den größten Druckwert. Es sei bemerkt, daß für eine feinere Abstufung der Druckwerte und damit der Schar-Vorspannung entsprechend mehr elektrische Schalter im Signalgeber 44 und auch im Schaltergehäuse 66 vorgesehen sein können. Außerdem kann der geometrische Abstand zwischen den Schaltern 53-55 verändert und damit die Druckwertbreite variiert werden. Die elektrischen Schalter 63, 64 und 65 in Fig. 2 stellen Vorwählschalter dar, mittels welcher manuell unterschiedliche Schar-Vorspannungen in die logische Schaltung 57 eingegeben werden können.

Der an einem Maschinenrahmenteil 17 befestigte elektrische Schalter 32 ist gleichfalls über eine elektrische Leitung 68 mit der logischen Schaltung 57 verbunden und eine weitere elektrische Leitung 69 verbindet einen drehrichtungsabhängigen, z. B. auf induktiver Basis arbeitenden elektrischen Schalter 70 mit der logischen Schaltung 57. Der drehrichtungsabhängig arbeitende elektrische Schalter 70 ist an einem Maschinenrahmenteil 17 starr angeordnet und wird durch ein Zahnprofilrad 71 betätigt, welches mit einem Laufrad 14 der Sämaschine antriebsmäßig gekuppelt ist. Die Funktionen des elektrischen Schalters 32 und des drehrichtungsabhängig arbeitenden elektrischen Schalters 70 werden noch beschrieben.

Während in Fig. 1 die Rückholfeder 84 zwischen dem Kolben und dem einen Ende des Schar-Hubzylinders 23 eingespannt dargestellt ist, ist die gleiche Rückholfeder in Fig. 2 schematisch zwischen einer am Maschinenrahmenteil 17 befestigten Halterung 85 und einer Stange 86 einnespannt gezeigt, die sämtliche Schararme 15 miteinander verbindet. Wenn der Schar-Hubzylinder 23 drucklos ist, schiebt die Rückholfeder 84 die Kolbenstange 22 gemäß Fig. 1 nach oben, wodurch die Hebel 21 und 19 im Uhrzeigersinn gedreht und die Betätigungsstangen 18 gemeinsam mit den Schararmen 15 angehoben werden. In Fig. 2 erfüllt die Rückholfeder 84 die gleiche Funktion, jedoch greift sie bei drucklosem Schar-Hubzylinder 23 an der Stange 86 an, um die Schararme 15 anzuheben.

Es wird nun angenommen, daß zur Ausführung von Säarbeiten die Sämaschine, die sich noch im angehobenen Zustand befindet, durch die Aushebevorrichtung des Traktors mit ihren Laufrädern 14 auf dem Boden abgesetzt werden soll. Zu diesem Zweck wird das Grundsteuergerät 29 entsprechend betätigt, so daß der Hydraulik-Zylinder 30 den Vorrahmen 27 und schließlich den Maschinen-Hauptrahmen der Sämaschine absenkt, bis die Laufräder 14 den Boden berühren. Der elektrische Schalter 32 wird in dieser Arbeitsphase durch den Permanent-Magneten 31 nicht geöffnet. Es ist noch darauf hinzuweisen, daß während dieser Arbeitsphase die Schare 12 durch die Rückholfeder 84 angehoben sind, so daß in jedem Fall beim Absetzen der Sämaschine zuerst deren Laufräder 14 Bodenkontakt bekommen. Um die Säarbeit aufnehmen zu können, müssen die Säschare 12 entgegen der Kraft der Rückholfeder 84 in Richtung Boden vorgespannt werden. Der Grad dieser Vorspannung der Schare 12 ergibt eine bestimmte Eintauchtiefe und wird durch manuelle Betätigung einer der elektrischen Schalter 63, 64 oder 65 bestimmt, die jeweils einer bestimmten Vorspannkraft der Säschare 12 zugeordnet sind. Desweiteren wird das traktorseitige Zusatz-Steuergerät 33 betätigt, so daß über die Rohrkupplung 35 unter Druck stehende Hydraulikflüssigkeit in die Leitung 36 einströmen kann, in der sich, da das Ventil 38 noch gesperrt ist, ein Druck aufbaut, der sich über die Hydraulik-Leitung 46 zum Hydraulik-Zylinder 45 fortpflanzt. Der Druck im Hydraulik-Zylinder 45 verstellt dessen Kolbenstange 47 und damit den Permanentmagneten 51 gemäß Fig. 2 nach links und zwar entgegen dem Druck des Stoßdämpfers 48 und der Feder 49. Dabei wird zuerst der elektrische Schalter 52 geschlossen, der ein Signal für die logische Schaltung 57 erzeugt, die ihrerseits beim Eingang dieses Signals über den elektrischen Leiter 59 ein Steuersignal abgibt, das den Elektromagneten 37 erregt, welcher das Sperrventil 38 öffnet. Das durch die Schaltung 57 erzeugte Steuersignal hat eine festgelegte Dauer, zweckmäßig 3 sec. (= Öffnungszeit). Hydraulikflüssigkeit strömt dann von der Leitung 36 in die Hydraulikleitung 39, in der sich ein entsprechender Druck zur Betätigund des Schar-Hubzylinders 23 aufbaut. Dei Letztere drückt nun die Schare 12 gegen bzw. in den Boden. Nach einem weiteren Druckanstieg in den Hydraulikleitungen 38, 39 und 46 wird auch die Kolbenstange 47 des Hydraulikzylinders 45 im Signalgeber 44 gemäß Figur 2 weiter nach links verstellt, und zwar so lange, bis derjenige elektrische Schalter, im Ausführungsbeispiel "54", geschlossen wird, der mit dem vorher manuell betätigten Schalter, z. B. "64", korrespondiert. Die logische Schaltung 57 vergleicht nämlich fortlaufend die vom Signalgeber 44 bzw. den einzelnen elektrischen Schaltern 53, 54 und 55 abgegebenen Signale mit dem durch den Vorwähl-Schalter 63, 64 oder 65 in die Schaltung 57 eingegebenen Druck- bzw. Vorspannungswert für die Schare 12. Stellt die Schaltung 57 eine Übereinstimmung fest, wird das Öffnungssignal für den Elektromagneten 37 unterbrochen. Diese Unterbrechung wirkt auf eine festgelegte Zeit, zweckmäßig 6 Sekunden (= Unterbrecherzeit). Folglich schließt jetzt das Sperrventil 38. Das Werteschema für die Schaltlogik läßt sich in Abhängigkeit der betätigten elektrischen Schalter wie folgt darstellen:

52 Öffnung
52 + 53 + 63 Unterbrechung
52 + 54 + 64 Unterbrechung
52 + 55 + 65 Unterbrechung.

Nach dem Druckaufbau für die Schare 12 betätigt der Traktorfahrer wieder das Zusatz-Steuergerät 33 an der Zugmaschine, um im Bedarfsfall einen Rücklauf der Hydraulikflüssigkeit in einen traktorseitigen Vorratsbehälter zu ermöglichen. Der Druck hinter dem Sperrventil 38 bleibt stehen, davor fällt er ab und der Hydraulik-Zylinder 45 fährt zurück, und zwar aufgrund seiner Federbelastung. Dabei wird der elektrische Schalter 52 wieder ausgelöst, was jetzt ohne Wirkung bleibt, weil die Unterbrecherzeit nach dem eben abgeschlossenen Druckaufbau noch andauert. Das entsprechende Signal vom Signalgeber 44 wird blockiert, wenn der hydraulische Druck vom Zusatz-Steuergerät 33 vor der Sperrventil 38 abgebaut wird, in der Sämaschine hinter dem Sperrventil 38 (Leitung 39) aber stehen bleiben soll. Wie schon oben erwähnt, ist nun der Rücklauf hinter dem Sperrventil 38 über die Hydraulikleitung 36 und das Zusatz-Steuergerät 33 frei bis in den Hydraulikflüssigkeits-Vorratsbehälter der Zugmaschine. Das Sperrventil 38 kann nach in die Schaltung 57 eingehenden elektrischen Signalen durch manuelle Betätigung eines Schalters 6 während des Betriebs sofort durch den Elektromagneten 37 geöffnet werden und Hydraulikflüssigkeit in den Traktor-Vorratsbehälter ablassen, wenn der Schardruck abgebaut werden soll. Der elektrische Schalter 6 bildet folglich einen "Auslöseschalter", der z. B. auch bei Störungen durch Staumassen vor den Scharen betätigt wird. Mit anderen Worten, die Schaltung 57 ist durch einen manuell betätigbaren Auslöseschalter 6 aktivierbar, um durch Öffnung des Sperrventils 38 jederzeit eine Aufhebung der Vorspannung und Einziehung der Schare 12 zu ermöglichen. Die Rückholfeder 84 hebt bei abgebautem Schardruck die Schare 12 an.

Auf obige Weise wird die Vorspannkraft eingeregelt, mit der sämtliche Schare 12 durch den Schar-Hubzylinder 23 gegen bzw. in den Boden gedrückt werden. Der Stoßdämpfer 48 verlängert die Reaktionszeit, so daß die Schare 12 nach Öffnung des Zusatz-Steuergerätes 33 ausreichend Zeit haben, in den Boden einzudringen, wobei zugleich eine Stabilisierung des Hydraulikdrucks vor dem Schar-Hubzylinder 23 erreicht wird.

Vorstehend ist das über das Zusatz-Steuergerät 33 manuell gesteuerte Aus- und Einfahren der Schare 12 beschrieben. Die Schare werden jedoch beim Anheben der Sämaschine durch die Aushebevorrichtung des Traktors oder beim Rückwärtsfahren der Sämaschine auch selbsttätig eingefahren. Im Ausführungsbeispiel ist an einem Maschinenrahmenteil 17 der elektrische Schalter 32 in Form eines Reed-Schalters befestigt, der durch den Permanentmagneten 31 geschaltet wird, wenn der Vorrahmen 27 beim Anheben der Sämaschine durch den Traktor eine begrenzte Relativbewegung gegenüber dem Maschinen-Hauptrahmen ausführt. In diesem Fall gibt der Schalter 32 ein Signal ab, auf das die logische Schaltung 57 anspricht, die ihrerseits über den elektrischen Leiter 59 ein Steuersignal abgibt, welches den Elektromagneten 37 erregt, der seinerseits das Sperrventil 38 öffnet, so daß der hydraulische Druck am Schar-Hubzylinder 23 abfällt (der Rücklauf der Hydraulikflüssigkeit über die Leitungen 36, 34 ist offen) und die Rückholfeder 84 für die Schare 12 in Funktion treten kann. Letztere zieht, wie schon oben erläutert, die Schare 12 in die Sämaschine zurück. Es wird noch bemerkt, daß beim Absetzen der Sämaschine durch die Aushebevorrichtung des Traktors die entsprechende Relativbewegung des Vorrahmens 27 gegenüber dem Maschinenhauptrahmen kein Signal durch den elektrischen Schalter 32 auslöst.

Um beim Rückwärtsfahren oder Zurückrollen der Sämaschine eine Verstopfung und/oder Beschädigung der Schare 12 zu vermeiden, wird auch in diesem Fall das Sperrventil 38 durch den Elektromagneten 37 geöffnet. Zu diesem Zweck ist, wie schon oben erwähnt, mit einem der Laufräder 14 der Sämaschine das Zahnprofilrad 71 drehfest verbunden, das beim Rückwärtsfahren oder Zurückrollen der Sämaschine den drehrichtungsabhänig arbeitenden, induktiven Schalter 70 betätigt, der über den elektrischen Leiter 69 ein Signal in die logische Schaltung 57 eingibt, die daraufhin das Steuersignal für die Betätigung des Elektromagneten 37 auslöst. So kann auch in diesem Fall die Rückholfeder 84 sämtliche Schare 12 augenblicklich anheben bzw. in die Sämaschine zurückziehen, da durch die Öffnung des Sperrventils 38 der Schar-Hubzylinder 23 druckentlastet ist. (Auch in diesem Fall ist der Rücklauf der Hydraulikflüssigkeit über die Leitungen 36, 34 offen).

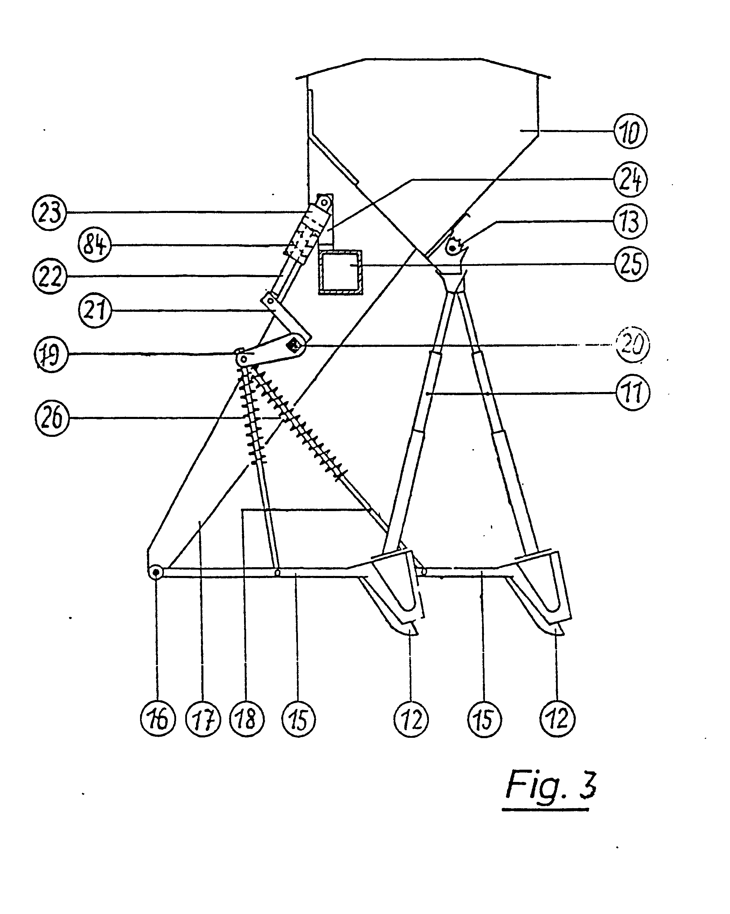

Die in Fig. 3 gezeigte Sä- oder Drillmaschine unterscheidet sich von der zuvor beschriebenen Sämaschine nur dadurch, daß das Laufrad fehlt und auch die gelenkige Verbindung zum Vorrahmen 27 nicht vorhanden ist. Vielmehr wird diese Maschine in an sich bekannter Weise direkt von der Zugmaschine wie andere Bodenbearbeitungsgeräte, z. B. Pflüge u. dgl., befestigt.

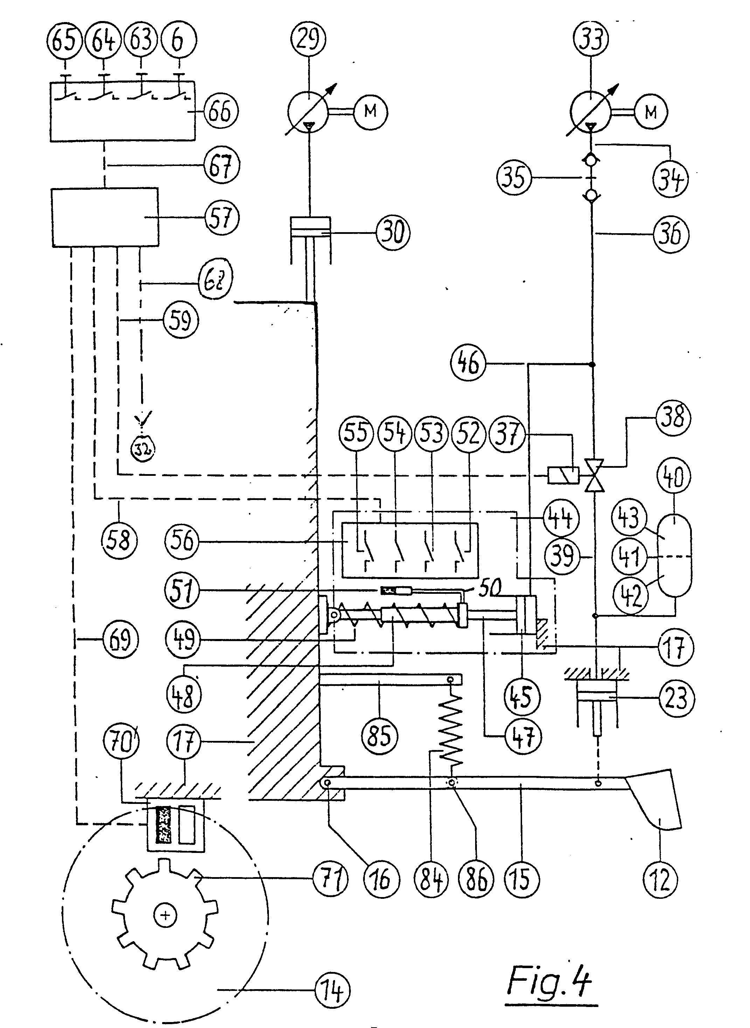

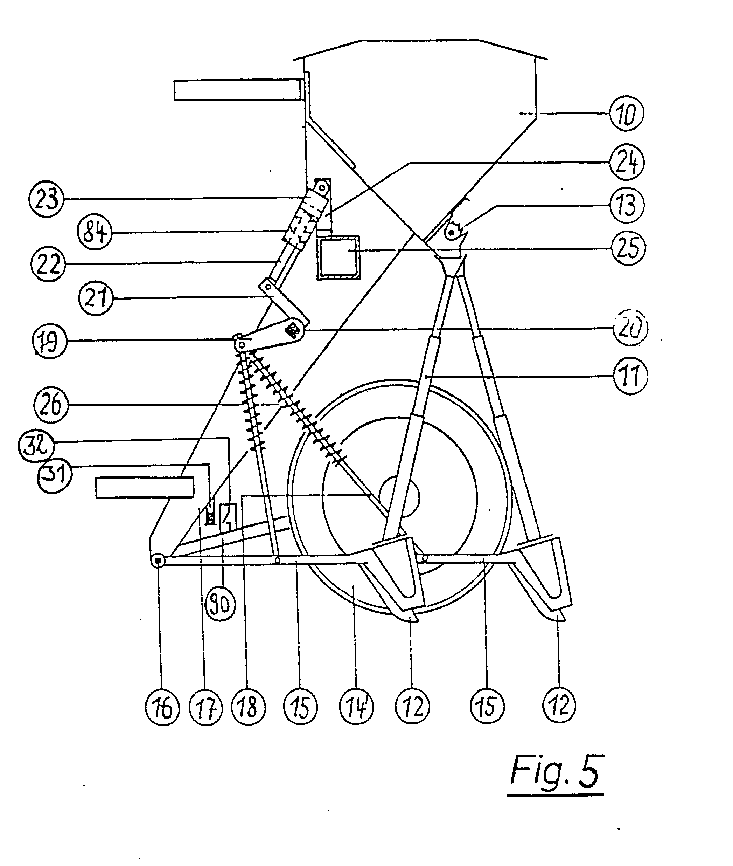

In Fig. 4 ist ein für die erfindungsgemäße Sämaschine abgewandeltes Schaltbild des elektrischen und hydraulischen Teils des Steuersystems dargestellt, wobei die Anordnung des Betätigungselementes 31 und des Schaltelementes 32 aus Fig. 5 hervorgehen, die ebenfalls die erfindungsgemäße Sämaschine zeigt in Verbindung mit einem Nachlaufrad 14', das über einen Verbindungshebel 90 wie gezeigt nachgezogen wird. Das Nachlaufrad 14' stützt die Sämaschine, wie es aus einem Vergleich von Fig. 5 mit Fig. 1 klar hervorgeht nicht ab, sondern dient nur als Geber für den Fühler 70', der nunmehr zur Erfassung der Drehgeschwindigkeit und der zurückgelegten Fahrstrecke verwendet wird. Wie aus Fig. 5 zu ersehen ist, ist das Betätigungselement 31 am Grundrahmen 17 befestigt, während das Schaltelement 32 an dem verschwenkbaren und bei 16 angelenkten Verbindungshebel 90 befestigt ist, so daß der Abstand der Sämaschine über dem Boden erfaßt werden kann und der Hubzylinder 23 auf ein Signal des Gebers 32 die Schare einfährt, wenn die Drillmaschine zu Wendemanövern ausgehoben werden muß. Sonst würde der Konstantdruckausgleich nicht zulassen, daß die Schare aus dem Boden herausgenommen werden. Die Maschine ließe sich dann ohne Verbiegung nicht drehen. In Arbeitsstellung hebt die Bodenoberfläche über das Rad 14 den Hebel so hoch, daß der Schalter 90 geöffnet ist. Beim Ausheben des Rahmens 17 fällt das Rad 14 nach unten durch und schließt dabei den Schalter 90. Ferner kann das Nachlaufrad noch die Bauteile 70 und 71 umfassen.

Das Laufrad 14' könnte auch noch über eine Kette (nicht gezeigt) mit einer über eine Dosierwelle angetriebenen Dosiereinrichtung verbunden sein.

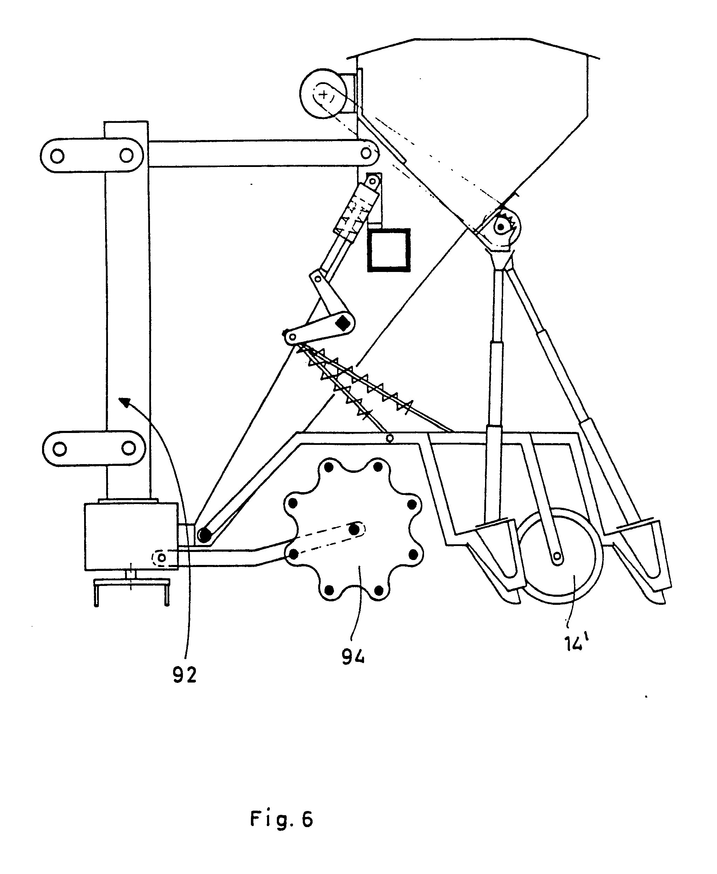

In Fig. 6 ist die erfindungsgemäße Sämaschine in Verbindung mit einem tragenden Bodenbearbeitungsgerät 92 beispielhaft gezeigt. Das mit dem Bezugszeichen 94 versehene Bauteil ist eine Packerwalze.

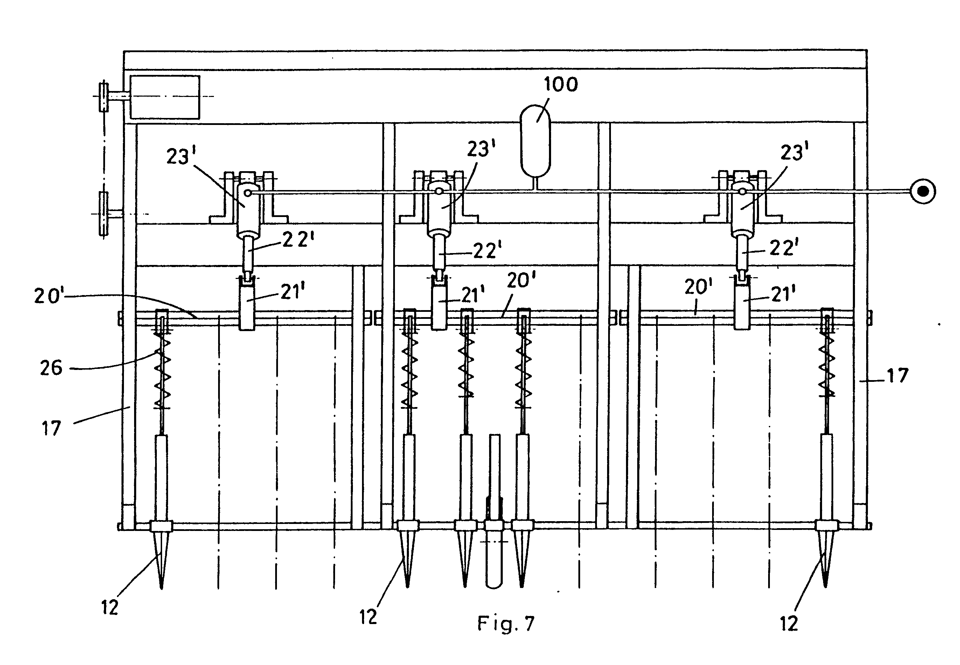

Fig. 7 zeigt eine Draufsicht auf eine erfindungsgemäße Sämaschine. Sie unterscheidet sich von der Sämaschine gemäß Fig. 1 dadurch, daß die Säschare 12 quer zur Fahrtrichtung zu mehreren aufeinanderfolgenden Gruppen zusammengefaßt sind, daß die Welle 20 in voneinander getrennte Wellenabschnitte 20' unterteilt ist und daß jedem Wellenabschnitt jeweils ein Hubzylinder 23' zugeordnet ist, so daß jede Gruppe von Säscharen 12 von einem eigenen Hubzylinder 23 mit konstantem Druck beaufschlagt wird. Wie ferner aus Fig. 7 zu entnenmen, sind die Hubzylinder miteinander und mit einem Druckspeicher 100 verbunden. Aufgrund dieser Anordnung ist es möglich, nicht nur Nickbewegungen der Sämaschine in Fahrtrichtung, sondern auch Nickbewegungen der Sämaschine quer zur Fahrtrichtung auszugleichen, indem beispielsweise eine Nickbewegung in Fig. 7 nach rechts unten die linke Gruppe von Säscharen weiter nach unten vom Rahmen entfernt werden kann als die rechte Gruppe von Säscharen.

Im übrigen haben Bauteile mit gleichen Bezugszeichen wie die Bauteile in den Figuren 1 und 2 die gleichen Funktionen, so daß sich ein näheres Eingehen erübrigt.

**Patentansprüche**

1. Sämaschine mit einem an einem Grundrahmen (17) befestigten Saatgutvorratsbehälter (10), relativ zum Saatgutvorratsbehälter anhebbaren und absenkbaren Scharen (12) und einer zwischen dem Grundrahmen und den Scharen wirksamen hydraulischen Einrichtung zur Ausübung eines im wesentlichen konstanten Druckes auf die in den Büden greifenden Schare, wobei der Grundrahmen mit dem Rahmen eines Fahrzeuges verbindbar ist,
dadurch gekennzeichnet,
daß an dem Grundrahmen (17) der Sämaschine mit dem Fahrzeugrahmen in auskragender Weise freitragend, ohne zusätzliche Abstützung am Boden befestigt ist.

2. Sämaschine nach Anspruch 1,
dadurch gekennzeichnet daß die Befestigung der Sämaschine lösbar ist.

3. Sämaschine nach einem der vorhergehenden Ansprüche, dadurch gekennzeichnet, daß eine hydraulische Dosiereinrichtung vorgesehen ist.

4. Sämaschine nach einem der Ansprüche 1 bis 3,
dadurch gekennzeichnet, daß die Säschare (12) quer zur Fahrtrichtung zu mehreren aufeinanderfolgenden Gruppen zusammennefaßt sind, die von je einer Druckeinrichtung (23') beaufschlagt werden, wobei alle Druckeinrichtungen den gleichen Druck ausüben.

5. Sämaschine nach Anspruch 4,
dadurch gekennzeichnet, daß die Gruppen von Säscharen (12) durch je einen Wellenabschnitt (20') verschwenkbar sind, an dem jeweils ein Hubzylinder (23') zur Verschwenkung des Wellenabschnittes angreift, und daß alle Hubzylinder (23') miteinander und mit einem Druckspeicher (100) verbunden sind.

**Claims**

1. Sowing machine with a seed hopper (10) fastened on a base frame (17), blades (12) which can be raised and lowered relative to the seed hopper and a hydraulic mechanism which acts between the base frame and the blades to exert an essentially constant pressure on the blades digging into the ground, the base frame being connectable to the frame of the vehicle, characterized in that the base frame (17) of the sowing machine is fastened to the vehicle frame in a cantilever way, without additional support on the ground.

2. Sowing machine according to claim 1, characterized in that the fastening of the sowing machine is detachable.

3. Sowing machine according to one of the preceding claims, characterized in that a hydraulic metering mechanism is provided.

4. Sowing machine according to one of claims 1 to 3, characterized in that the sowing blades (12) are combined to form several successive groups transverse to the direction of travel, each of which has a pressure mechanism (23') acting upon it, all pressure mechanisms exerting the same pressure.

5. Sowing machine according to claim 4, characterized in that the groups of sowing blades (12) are each pivotable by means of a shaft section (20') each of which is engaged by a lifting cylinder (23') for pivoting of the shaft section, and in that all lifting cylinders (23') are connected to one another and to a pressure accumulator (100).

**Revendications**

1. Semoir comprenant un réservoir de stockage de semences (10) fixé à un cadre de base (17), des socs (12) soulevables et abaissables par rapport au réservoir de semences, et un dispositif hydraulique agissant entre un cadre de base et les socs pour exercer une pression sensiblement constante sur les socs pénétrant dans le sol, le cadre de base étant reliable au châssis du véhicule, caractérisé en ce que le cadre de base (17) du semoir est fixé, de façon saillante, en porte-à-faux, sans appui supplémentaire au sol, au châssis de véhicule.

2. Semoir selon la revendication 1, caractérisé en ce que la fixation du semoir est amovible.

3. Semoir selon une des revendications précédentes, caractérisé en ce qu'il est prévu un dispositif de dosage hydraulique.

4. Semoir selon une des revendications 1 à 3, caractérisé en ce que les socs semoirs (12) sont rassemblés transversalement à la direction de marche en plusieurs groupes successifs, sollicité chacun par un dispositif de pression (23'), tous les dispositifs de pression exerçant la même pression.

5. Semoir selon la revendication 4, caractérisé en ce que les groupes de socs semoirs (12) peuvent pivoter chacun au moyen d'un tronçon d'arbre (20'), sur lequel agit respectivement un vérin hydraulique (23') pour le pivotement du tronçon d'arbre, et en ce que tous les vérins hydrauliques (23') sont raliés entre eux et à un accumulateur de pression (100).

*Fig. 1*

0 129 614

*Fig. 2*

3

*Fig. 3*

Figure 4 — Patent EP 0 129 614, page 7

**0 129 614**

*Fig.4*

*Fig. 5*

92

94

14'

Fig. 6

Fig. 7

0 129 614